(19) Europäisches Patentamt
European Patent Office
Office européen des brevets

(11) **EP 3 224 006 B1**

(12) **EUROPEAN PATENT SPECIFICATION**

(45) Date of publication and mention
of the grant of the patent:
**22.09.2021 Bulletin 2021/38**

(21) Application number: **15802092.5**

(22) Date of filing: **30.11.2015**

(51) Int Cl.:
**B26D 1/28** *(2006.01)*          **A22C 17/00** *(2006.01)*
**B26D 5/00** *(2006.01)*          **B26D 7/06** *(2006.01)*
**B26D 7/00** *(2006.01)*

(86) International application number:
**PCT/EP2015/078098**

(87) International publication number:
**WO 2016/083621 (02.06.2016 Gazette 2016/22)**

(54) **A CUTTING DEVICE ADAPTED TO BE PLACED ABOVE A GAP EXTENDING ACROSS A CARRYING SURFACE OF A CONVEYOR SYSTEM AND A CORRESPONDING METHOD FOR CUTTING FOOD ITEMS.**

ANGEPASSTE SCHNEIDVORRICHTUNG, DIE ÜBER EINEM SPALT ZU POSITIONIEREN IST, DER SICH ÜBER EINE TRAGENDE FLÄCHE EINER FÖRDERANLAGE ERSTRECKT, UND ENTSPRECHENDES VERFAHREN ZUM ZERSCHNEIDEN VON LEBENSMITTELN.

DISPOSITIF DE COUPE CONÇU POUR ÊTRE PLACÉ AU-DESSUS D'UN ESPACE S'ÉTENDANT À TRAVERS UNE SURFACE DE TRANSPORT D'UN SYSTÈME TRANSPORTEUR, ET PROCÉDÉ CORRESPONDANTE DE COUPAGE DE PRODUITS ALIMENTAIRES.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2014 EP 14195505**

(43) Date of publication of application:
**04.10.2017 Bulletin 2017/40**

(73) Proprietor: **Marel A/S**
**8200 Arhus N (DK)**

(72) Inventors:
• **SØRENSEN, Gorm**
**3720 Aakirkeby (DK)**
• **MIKKELSEN, Peter**
**3740 Svaneke (DK)**

(74) Representative: **Patentgruppen A/S**
**Aaboulevarden 31, 4th Floor**
**8000 Aarhus C (DK)**

(56) References cited:
**EP-A1- 2 957 175          WO-A1-2004/106020**
**WO-A2-2007/022782          US-A1- 2006 154 587**
**US-A1- 2007 157 776          US-B1- 6 407 818**

**Description**

FIELD OF THE INVENTION

The present invention relates to a cutting device that is adapted to be placed above a gap extending across a carrying surface of a conveyor system. The present invention further relates to a method of using such a cutting device and to a cutting system

BACKGROUND OF THE INVENTION

Within the foodstuffs industry, demands are made from time to time concerning special cuts of meat, an example of these being special portion cuts of poultry. The starting point for the meat cuts is flat foodstuff e. g. de-boned leg-meat, where the remaining meat and skin are made "smooth" in one piece.

The Danish Utility Model DK 96 00164 U3 describes an apparatus for portion cutting where a food product is transported on the conveyor system consisting of two conveyors installed end to end with a cutting gap there between. A scanning system is provided over the first conveyor system and a rotating sword like knife is arranged such that it by turning passes through the gap and cuts the food product into smaller food products when it passes the gap. The cutting is controlled by a controller in accordance with setup parameters and the found shape of the product during the scanning phase.

With such an apparatus a food product is typically cut into small food products of an extension of more than 10 mm in the conveying direction, and they will typically be of different extension.

The width of the conveyor system in such an apparatus is typically in the range 200 to 300 mm. The turning point of the sword like knife is typically arranged 150 to 200 mm from the side of the conveyor next to the gap and in more or less the same height. Hence the knife will typically have a length of 350 to 500 mm.

To fulfill the requirement of varying extension in the conveying direction, the knife is typically turned one revolution and stopped in a position opposite the conveyor system after each cut. To make e.g. 7 cuts per second the acceleration from 0° to 180° must happen in 71 ms and the deceleration from 180° to 360° also in 71 ms; this makes a max periphery speed of 44.0 m/s for a knife of 500 mm length, the speed of the knife at the inside of a 300 mm wide conveyor with the same knife would be 17.6 m/s.

The force the knife is exposed to under such conditions will easily get it to flex and bend during the acceleration, such that it will not hit the food product exactly where it is planned. To compensate for that, very often, a guide system is provided to steer the far end of the knife.

This known apparatus, and other known apparatuses of the same type typically comprise a knife that is arranged at the sides of the apparatus and where the lengths of the knife must typically exceed the width of the conveyors transporting the food items, which is reflected in high weight and inertia of the knifes which obviously may affect the speed of the cutting. Also, the fact that the knife is arranged at the sides makes the cutting apparatus spacious.

An example of a cutting device comprising a knife arranged above the conveyor path can be found in document WO 2004/106020 A1.

SUMMARY OF THE INVENTION

On the above background it is an object of the present invention to provide an improved cutting device that is much lighter and which thus allow faster cutting process. Moreover, it is an object of the present invention to provide a more compact knife which is suitable to be situated above the conveyor instead of being situated at the side of the conveyors.

In general, the invention preferably seeks to mitigate, alleviate or eliminate one or more of the above mentioned disadvantages of the prior art singly or in any combination. In particular, it may be seen as an object of embodiments of the present invention to provide a cutting device that solves the above mentioned problems, or other problems.

To better address one or more of these concerns, in a first aspect of the invention a cutting device is provided above a gap extending across a carrying surface of a conveyor system with the cutting plane of the cutting device extending through the gap, where the cutting device is adapted for cutting food items into smaller food items via rotational movement of the cutting device while the food items conveyed by the conveyor system pass the gap, the cutting device comprising:

- an arm,
- a cutting blade mounted to one end of the arm, the opposite end of the arm being adapted to be mounted to a driving unit for supplying rotational movement of the arm and thus the cutting blade,

wherein the cutting blade is mounted to the arm such that, while cutting a food item into smaller food items, a cutting edge side of the cutting blade engages with the food item under an angle such that the cutting blade exerts with a downwardly facing force onto the food item and towards the carrying surface of the conveyor system during the cutting.

Accordingly, a cutting device is provided that is significantly lighter and smaller than prior art cutting devices and that is suitable to be placed above the carrying surface, which may be a conveyor belt of a conveyor apparatus. Since the cutting device may be mounted above the carrying surface and not at the side, the dimension of the cutting system, i.e. the conveyor system with the cutting device, may be greatly reduced. Also, the fact that the arm may be made of light weight material the weight and the inertia of the cutting device may be reduced significantly, since the cutting device is preferably accelerated and decelerated (started and stopped) for each cut, which will obviously be reflected in higher cutting speed i.e. number of slices cut per minute may be increased.

Since the blade can be very small it will be economical feasible to make the blades as one time use items, rather than re-sharpening the knife which is common today.

Since the blade is relatively short compared to the total length of the arm and the blade, the cutting speed of the blade is more constant compared to a traditional knife where the rotating axis is placed at the side of the conveyor. In the traditional system the speed of the knife at the side of the conveyor close to the rotating axis of the knife is significant lower than the speed of the knife at the other side of the conveyor. Based on the above it is therefore easier to choose a cutting speed that provides a good cutting quality. This is especially important when cutting fragile tissues like the skin on a deboned chicken leg.

The cutting system referred to above is a cutting system that cuts food items such as boneless chicken legs into smaller food items, such as fixed portions, where the fixed portions may have pre-defined shape such as, but not limited to, a square and/or fixed weight.

In such cases, two or more cutting devices may be utilized, both being placed above gaps that form an angle in relation to each other, where the first cutting device cuts the food item into a multiple of strips and where the other cutting device cuts the strips into pieces, e.g. squares, rectangles, etc. In case of squares and rectangles, the angle between the gaps would be around 90°.

The gap(s) may be formed by placing two or more conveyors together such that a second end of a first conveyor is placed adjacent to a first end of a second conveyor, where the distance there between defines the gap. Similarly, a first end of a third conveyor may be placed adjacent to a second end of the second conveyor to define the second gap. Since the blade only have to pass through a gap in the carrying surface of the conveyors, the gap might be created by making loops in a single endless conveyor.

There between, sub-conveyors or spacers may be provided to create or increase the distance between the food strips from the first cutting device.

The term gap may also be understood as an opening, a slit and the like.

According to the invention, the cutting blade is mounted to the arm in such a manner that the cutting edge side of the cutting blade forms an angle in relation to a longitudinal axis of the arm where this axis is perpendicular to the rotational axis of the arm.

In one embodiment, the cutting edge side and the carrying surface or a tangent at the point of contact of the carrying surface around the gap form an acute angle during the cutting. It is thus ensured that a downwardly pointing force is created which prevents the food items to slide or move during the cutting. In an embodiment, the acute angle is between 10° and 60°, preferably between 20° and 30°, most preferably around 25°.

In one embodiment, the angle is adapted to the type and/or the characteristics of the food item and/or the coefficient of friction of the carrying surface such that during cutting, the horizontal force exerted ($F_{hori}$) by the cutting device onto the food item does not exceed the frictional force between the food item and the carrying surface. It is thus ensured that during the cutting the friction force pointing in the opposite direction to the horizontal force ($F_{hori}$) is sufficient to prevent side-wise displacement during the cutting.

The friction between the carrying surface and the food item may be increased by for example providing negative pressure from underneath the conveyor in the cutting zone or by using a weight loaded belt on top of the food item.

In one embodiment, the cutting edge side comprises a smooth cutting edge. In an embodiment, the smooth cutting edge is a substantially straight cutting edge or a curved line.

In one embodiment, the arm is made of a material selected from:

- carbon fibres,
- ceramic material,
- plastic material, or
- metal or metal alloy.

In one embodiment, the length of the arm is adapted to the maximum thickness of the food items, such that when the arm is mounted to the driving unit, the length of the arm is shorter than the distance from the pivot to the food items with a clearance distance between the opposite end of the arm and the top of the food items. The clearance distance may in one embodiment be in the range of 1 to 9 mm, preferably in the range of 3 to 7 mm, most preferably around 5 mm.

Since the height of the product is limited to the distance from the arm to the carrying surface it may be advantageous to use a so called flattener before the cutting system, alternatively a sensor system may be used to abort cutting if the height of the products exceeds this limit.

In one embodiment, the blade exceeds below the carrying surface. The extension depth may in one embodiment be in the range of 1 to 9 mm, preferably in the range of 3 to 7 mm, most preferably around 5 mm.

In one embodiment, the carrying surface is concave and shaped such that it substantially follows the path of the cutting blade. The size of the cutting device may thus be minimized, especially the length of the cutting blade.

In one embodiment, the distance from the rotational axis of the arm to where the cutting blade is mounted is more than half the distance from the rotational axis of the arm to the tip of the cutting blade.

In one embodiment, the distance from the rotational axis of the arm to where the cutting blade is mounted is more than ¾ of the distance from the rotational axis of the arm to the tip of the cutting blade.

In one embodiment, the distance from the rotational axis of the arm to an inner point of the cutting blade is more than half the distance from the rotational axis of the arm to the tip of the cutting blade.

In one embodiment, the distance from the rotational axis of the arm to an inner point of the cutting blade is more than ¾ of the distance from the rotational axis of the arm to the tip of the cutting blade.

In one embodiment, the distance from the rotational axis of the arm to an inner point of the cutting edge side is more than half the distance from the rotational axis of the arm to the tip of the cutting blade.

In one embodiment, the distance from the rotational axis of the arm to an inner point of the cutting edge side is more than ¾ of the distance from the rotational axis of the arm to the tip of the cutting blade.

In one embodiment, the cutting device is adapted for adjusting and/or stopping/starting the rotational movement of the arm and the cutting blade in between successive cuts.

In one embodiment, the cutting device is placed above the gap extending across the carrying surface of the conveyor system by having a rotational axis of the arm of the cutting device arranged above the carrying surface.

In one embodiment, the cutting device is placed above the gap extending across the carrying surface of the conveyor system by having a rotational axis of the arm of the cutting device arranged above the carrying surface at a selected position within the width of the conveyor system, e.g. the width of the carrying surface.

In one embodiment, the cutting device is adapted for cutting flat food items that have a width along the gap that is larger than the maximum height of the food item. In one embodiment, the width along the gap is significantly larger than the maximum height of the food item, e.g. the maximum height to width ratio being less than 1:4, the maximum height to width ratio being less than 1:10, or the like.

According to a second aspect, the present invention relates to a method of cutting food items into smaller food items using a cutting device, where the cutting device is placed above a gap extending across a carrying surface of a conveyor system with the cutting plane of the cutting device extending through the gap, where the cutting device is adapted for cutting food items into smaller food items via rotational movement of the cutting device while the food items conveyed by the conveyor system pass the gap, the cutting device comprising:

- an arm,
- a cutting blade mounted to one end of the arm, the opposite end of the arm being adapted to be mounted to a driving unit for supplying rotational movement of the arm and thus the cutting blade,

wherein the cutting blade is mounted to the arm such that, while cutting a food item into smaller food items, a cutting edge side of the cutting blade engages with the food item under an angle such that the cutting blade exerts with a downwardly facing force onto the food item and towards the carrying surface of the conveyor system during the cutting.

According to a third aspect, the present invention relates to a cutting system adapted to cut food items into smaller food items, comprising the above mentioned cutting device, where the cutting system further comprises:

- an imaging system for providing image data for an incoming food item, and
- a processor for controlling the cutting device based on the image data. In general the various aspects of the invention may be combined and coupled in any way possible within the scope of the invention. These and other aspects, features and/or advantages of the invention will be apparent from and elucidated with reference to the embodiments described hereinafter.

In one embodiment, the cutting system comprises an angle adjustment system operable connected to the knife device for tilting the angle of the knife device, as an example in an angle between 10 and 60° in relation to vertical. It is thus possible to cut the food items under an angle, instead of a vertical cut, to improve the appearance of the food items so they look more natural. In that way the value of the smaller food items may be increased.

In one embodiment, the cutting system further comprises at least one further cutting device arranged downstream in relation to the cutting device so as to perform at least one subsequent cut on the food items.

In one embodiment, the cutting planes of the cutting devices form an angle between 30 and 120° in the conveying direction.

This is especially beneficial when the food item is to be cut into pre-fixed portions of target weight and/or predefined shape such as cubes.

The fact that the cutting device is arranged above the carrying surface, e.g. a conveyor apparatus comprising a conveyor belt, instead at the sides as in prior art cutting systems, the cutting system becomes more compact. Also, due to how low the inertia of the knife device can be, the cutting speed and thus the throughput of the cutting system may be increased.

BRIEF DESCRIPTION OF THE DRAWINGS

Embodiments of the invention will be described, by way of example only, with reference to the drawings, in which

figure 1 shows a cutting device according to the present invention adapted to be placed above a gap extending across a carrying surface of a conveyor system with the cutting plane of the cutting device extending through the gap,
figure 2 shows a zoomed up view of the cutting device in figure 1,
figure 3 shows the knife device in figure 1 and 2, where a gap the cutting place of the knife device extends through has a concave shape,
figure 4a,b,c depicts graphically the movement of the cutting device shown in figure 1,
Figure 5a,b,c depict similarly the movement of the cutting device shown in figure 3, and
figures 6a-f depicts graphically examples of different speed curves of the cutting system, where for simplicity all curves are made with constant acceleration and deceleration.

DESCRIPTION OF EMBODIMENTS

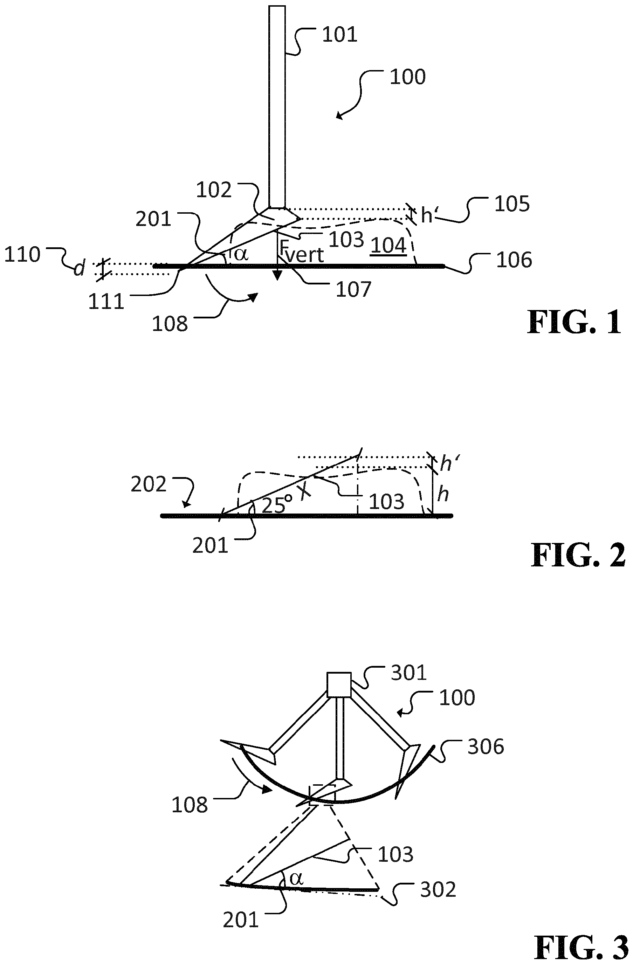

Figure 1 shows a cutting device 100 according to the present invention adapted to be placed above a gap 106 extending across a carrying surface of a conveyor system with the cutting plane of the cutting device extending through the gap. The cutting device is adapted for cutting food items 104 into smaller food items via rotational movement of the cutting device 100 as indicated by arrow 108 while the food items 104 conveyed by the conveyor system pass the gap 106.

The cutting device comprises an arm 101 and a cutting blade 102. The arm is preferably made of light weight material such as, but not limited to, carbon fibers and the like.

The cutting blade 102 is mounted to one end of the arm, where the opposite end of the arm is adapted to be mounted to a driving unit for supplying the rotational movement 108 of the arm and thus the cutting blade. The cutting blade is mounted to the arm such that, while cutting a food item 104 into smaller food items, a cutting edge side 103 of the cutting blade engages with the food item under an angle 201 such that the cutting blade exerts with a downwardly facing force 107 onto the food item and towards the carrying surface of the conveyor system during the cutting.

As depicted here, the position of the knife device 100 is adjusted such that the distal end 111 of the edge side 103 of the knife device extends partly through the gap during the cutting, e.g. some millimetres.

Figure 2 shows a zoomed up view of the cutting device in figure 1, where the angle 201 between cutting edge side 103 and the carrying surface 202 (or a tangent at the point of contact of the carrying surface around the gap) is an acute angle 201 during the cutting. In one embodiment, the acute angle is between 10° and 60°, preferably between 20° and 30°, most preferably around 25° as shown here.

The angle 201 is adapted to the type and/or the characteristics of the food item and/or the coefficient of friction of the carrying surface such that during cutting, the horizontal force exerted by the cutting device onto the food item docs not cxcccd the frictional force between the food item and the carrying surface.

Figure 3 shows the knife device in figure 1 and 2, where the gap 306 has a concave shape, which may be an arc having a similar center point as the pivot point of the driving unit 301 that drives the rotational movement 108 of the cutting device 100. Similar as discussed in relation to figure 2, the angle 201 between the cutting edge side 103 and the tangent to the carrying surface 302 is an acute angle during cutting and may e.g. be around 25° in case the food item is boneless chicken leg.

The cutting edge side preferably comprises a smooth cutting edge which may be a substantially straight cutting edge or curved edge.

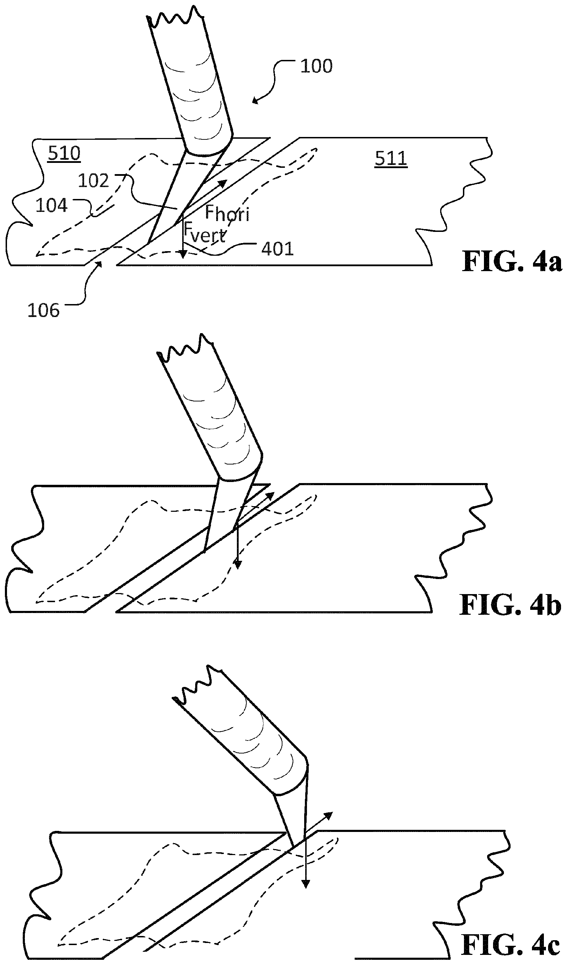

Figure 4a,b,c depicts graphically the movement of the cutting device 100 shown in figure 1 where the carrying surface 510, 511 may be a surface of a single conveyor via e.g. a bypass loop, or two conveyors, where a second end of a first conveyor 510 is placed adjacent to a first end of a second conveyor 511, where the distance between the first and the second end defines the gap 106.

As shown here, the cutting blade 102 exerts with a downwardly pointing force $F_{vert}$ and a horizontal force $F_{hori}$, where the angle between the cutting blade and the carrying surface discussed previously is such that the friction force pointing opposite to the horizontal force $F_{hori}$ is equal to prevent side-wise sliding of the food item 104.

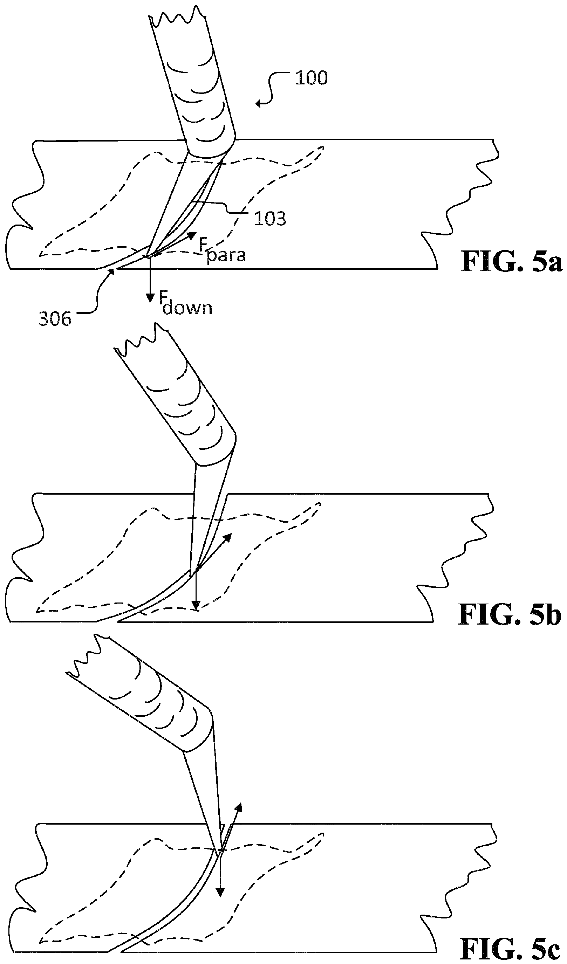

Figure 5a,b,c depict similarly the movement of the cutting device 100 shown in figure 3 where the carrying surface around the gap has a concave shape, e.g. an arc shape where the arc has substantially the same center point as the pivot point of the driving unit. As depicted here, the position of the knife device 100 is adjusted such that the distal end of the edge side 103 of the knife device extends partly through the gap during the cutting, the extension may be in the range of 1 to 9 mm, preferably in the range of 3 to 7 mm, most preferably around 5 mm. By optimizing the shape of the conveyor in relation to the path of the blade it is possible to minimize the effective length of the cutting edge 103. As an example, in case the food item is boneless chicken leg a preferred angle is around 25°. Referring to figs. 1 and 2 and the references indicated in these figures, the following applies. Assuming that the maximum thickness $h$ of the boneless chicken legs is 10 mm and that the distance to the arm 101 is as an example 5mm from the maximum thickness of the boneless chicken legs, hereby referred to as clearance distance $h'$, and that the depth that the blade exceeds below the carrying surface as an example is 5 mm, hereby referred to as depth $d$, the length $X$ of the cutting edge side 103 is:

$$X = (h + h' + d)/\sin 25° = 20 \text{ mm}/\sin 25° = 47{,}3 \text{ mm}.$$

Accordingly, a very short cutting blade is needed to perform the cutting of such boneless chicken legs, where the primary part of the cutting device is the arm, which as already addressed, can be made of any type of lightweight material.

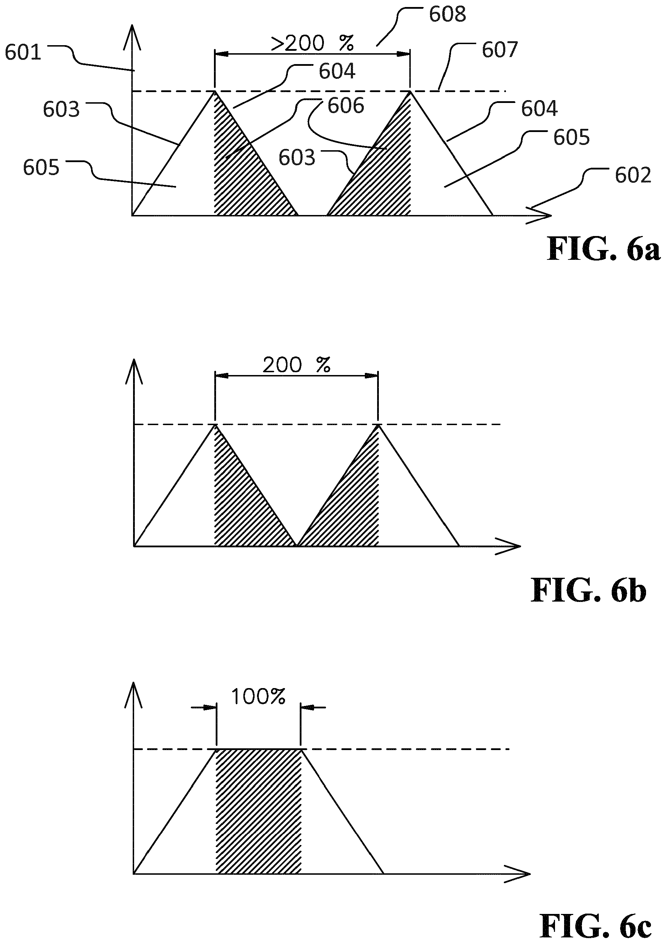

Figure 6a-f depicts graphically examples of different speed curves of the cutting system. For simplicity all curves are made with constant acceleration and deceleration.

On all curves the Y axis 601 represents the speed of the cutting device with zero speed at the X axis, and the X axis 602 represent the time. The steepness of the line 603 represents acceleration, where the steepness of the line 604 represents the deceleration. In these examples the acceleration and deceleration has the same rate. The dotted line 607 represents the speed where the meat is cut. This speed is the same on all curves.

The "non-hatched" cross section areas 605 in these example all represent 180° of movement of the cutting system, so that the two cross section areas combined equals one revolution. The hatched cross section area 606 also equals one revolution. The percentage 608 shows the time in relation to constant speed (as seen in fig. 6c) of the cutting device in each curve example.

Fig 6a depict an example on curves including two cuts where the cutting device is standing still between the two cuts.

Fig 6b depicts an example on curves including two cuts where the cutting device is accelerating for the second cut immediately after stopping after the first cut.

Fig 6c depicts an example on a curve including two cuts where the cutting device is running at constant speed between the first and second cut.

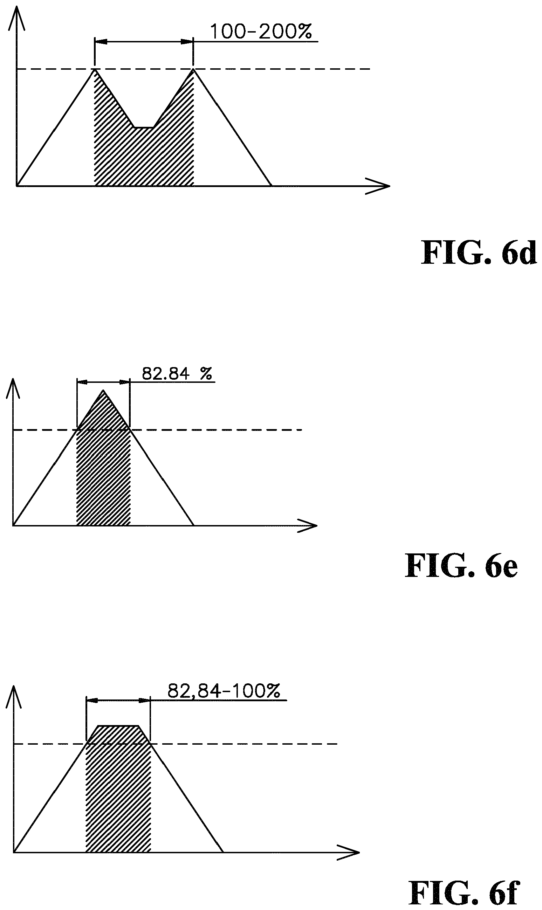

Fig 6d depicts an example on a curve including two cuts where the cutting device is decelerating to a constant speed and then accelerate before making the second cut.

Fig 6e depicts an example on a curve including two cuts where the cutting device is accelerating to a maximum speed and then decelerate before making the second cut.

Fig 6f depicts an example on a curve including two cuts where the cutting device is accelerating to a constant speed and then decelerates before making the second cut.

As seen on figures 6e-f it is possible to create speed curves where the time between each cut is less than achieved by running at constant speed and still being able to stop the cutting system 180° after making a cut.

It is clear that the acceleration and deceleration can be lowered from the maximum and creates other curves and cutting speeds. It is also clear that other curves for example: Curves with variable acceleration and deceleration can be created. It is also clear that the curves can be combined to create different time between cuttings in sequences of multiple cuts.

All figures 6a-f show a situation where the cutting device starts from zero velocity at a position opposite the meat, accelerate to cutting speed, and cut the meat, move one more revolution where a second cut is made and after this the cutting device stops again.

The calculation of the maximum acceleration / deceleration and the cutting speed can be explained by the following example, wherein values are taken from a prototype:

The cutting device is able to accelerate to cutting speed in half a revolution, and also stop again in half a revolution.

| | |
|---|---|
| The inertia of the cutting device is: | 0.00183 kgm$^2$ |
| The inertia of the rotor of the drivemotor for the cutting system is: | 0.00106 kgm$^2$ |
| The available torque from the drive motor is, M: | 20 Nm |

The distance from the axis of the cutting system to a concaved conveyor surface: 340 mm. Max height of the product to be cut: 20 mm.

The total inertia of the system, $I_{tot}$: ($I_{tot} = I_{cut} + I_{mot}$) 0.00183 + 0.00106 = 0.00289 kgm$^2$

The angular acceleration $W_{rad}$:
$$\left(W_{rad} = \frac{M}{Itot}\right) \quad \frac{20}{0{,}00289} = 6912 \text{ rad/sec}^2$$

The angular acceleration $W_{rot}$:
$$\left(W_{rot} = \frac{wrad}{2*\pi}\right) \quad \frac{6912}{2*\pi} = 1100.8 \text{ rotations/sec}^2$$

$$T: (0.5 = T * T * W_{rot} * 0.5 => T = \sqrt{\frac{1}{wrot}}) \quad \sqrt{\frac{1}{1100{,}8}} = 0.03 \text{ sec}$$

Time to accelerate 180°,

Cutting speed, rps: (T * $W_{rot}$) 0.03 * 1100.8 = 33 rps

Peripheral speed of the blade at the bottom of the product: 33 * 0.34 * 2 * $\pi$ = 71 m/s Peripheral speed of the blade at the top of the product: 33 * 0.32 * 2 * $\pi$ = 67 m/s

As seen above it is clear that the inertia of the cutting device is a significant factor for how many cut per minute there can be performed and therefore also on the throughput.

As it can be seen from the example above, the time to accelerate from 0° position to 180° position is 30 ms. Compared to the prior art example in the beginning of the description that is more than double the operational speed. Also the peripheral speed is increased significantly and is also more constant compared to the prior art example.

When selecting a motor for a cutting device, the inertia of the cutting device is normally known. The inertia of the rotor for the motors has to be added, to find the total inertia of the rotating system. The available torque from the motor in combination with this total inertia defines how fast the cutting device can be accelerated.

Typically servo motors are chosen for this type of applications due to a good ratio between torque and the inertia of the rotor.

In general motors with higher torque have a lower ratio between the torque and the inertia of the rotor. This is due to the fact that the rotor (if everything else is equal) grows in all three dimensions. When the length of the rotor increases the inertia increases proportionally, when the diameter increases the inertia increase more than the torque.

Therefore, the ratio between the inertia of the cutting device and the rotor of the servo motor decreases, when the inertia of the cutting device increases. Consequently, the inertia of the rotor itself will be a more and more significant factor for defining the maximum acceleration and cutting rate.

Thus, it is possible to reach a higher acceleration rate when starting with a lower inertia for the cutting device.

While the invention has been illustrated and described in detail in the drawings and foregoing description, such illustration and description are to be considered illustrative or exemplary and not restrictive; the invention is not limited to the disclosed embodiments, but to the subject-matter of the appended claims.

**Claims**

1. A cutting device (100) adapted for cutting food items into smaller food items (104) via rotational movement of the cutting device (100) while the food items conveyed by a conveyor system (520) pass a gap (106, 306), which extends across a carrying surface (510, 511) of the conveyor system (520) with the cutting plane of the cutting device extending through the gap, **characterized in that** the cutting device is placed above the gap (106, 306), the cutting device comprising:

   • an arm (101),
   • a cutting blade (102) mounted to one end of the arm, the opposite end of the arm being adapted to be mounted to a driving unit (301) for supplying rotational movement of the arm and thus the cutting blade,
   wherein the cutting blade is mounted to the arm such that, while cutting a food item into smaller food items, a cutting edge side (103) of the cutting blade engages with the food item under an angle (201) such that the cutting blade exerts with a downwardly facing force (401) onto the food item and towards the carrying surface (510, 511) of the conveyor system (520) during the cutting, and
wherein the cutting blade (102) is mounted to the arm (101) in such a manner that the cutting edge side (103) of the cutting blade forms an angle in relation to a longitudinal axis of the arm (101), said longitudinal axis of the arm being perpendicular to the rotational axis of the arm (101).

2. The cutting device according to claim 1, wherein the cutting edge side (103) and the carrying surface or a tangent at the point of contact (302) of the carrying surface (306) around the gap form an acute angle (201) during the cutting.

3. The cutting device according to claim 2, wherein the acute angle is between 10° and 60°, preferably between 20° and 30°, most preferably around 25°.

4. The cutting device according to any of the preceding claims, wherein the cutting edge side comprises a smooth cutting edge.

5. The cutting device according to claim 4, wherein the smooth cutting edge is a substantially straight cutting edge.

6. The cutting device according to any of the preceding claims, wherein the arm (101) is made of a material selected from:

   • carbon fibers,
   • ceramic material,
   • plastic material, or
   • metal or metal alloy.

7. The cutting device according to any of the preceding claims, wherein the length of the arm is adapted to the maximum thickness of the food items, such that when the arm is mounted to the driving unit, the length of the arm is shorter than the distance from the pivot to the food items with a clearance distance between the opposite end of the arm and the top of the food items, where the clearance distance may be in the range of 1 to 9 mm, preferably in the range of 3 to 7 mm, most preferably around 5 mm.

8. The cutting device according to any of the preceding claims, wherein the carrying surface is concave and shaped such that it substantially follows the path of the cutting blade (102).

9. The cutting device according to any of the preceding claims, wherein the cutting device is adapted for adjusting and/or stopping/starting the rotational movement of the arm and the cutting blade (102) in between successive cuts.

10. A method of cutting food items into smaller food items using a cutting device, where the cutting device is adapted for cutting food items into smaller food items (104) via rotational movement of a cutting device while the food items conveyed by a conveyor system pass a gap extending across a carrying surface (510, 511) of the conveyor system (520) with the cutting plane of the cutting device extending through the gap, **characterized in that** the cutting device is placed above the gap (106, 306), the cutting device comprising:

    • an arm (101),
    • a cutting blade (102) mounted to one end of the arm, the opposite end of the arm being adapted to be mounted to a driving unit (301) for supplying rotational movement of the arm and thus the cutting blade,
    wherein the cutting blade is mounted to the arm such that, while cutting a food item into smaller food items, a cutting edge side (103) of the cutting blade engages with the food item under an angle (201) such that the cutting blade exerts with a downwardly facing force (401) onto the food item and towards the carrying surface of the conveyor system during the cutting, and
    wherein the cutting blade (102) is mounted to the arm (101) in such a manner that the cutting edge side (103) of the cutting blade forms an angle in relation to a longitudinal axis of the arm (101), said longitudinal axis of the arm being perpendicular to the rotational axis of the arm (101).

11. A cutting system adapted to cut food items into smaller food items, comprising the cutting device according to any of the claims 1-9, where the cutting system further comprises:

    • an imaging system for providing image data for an incoming food item, and
    • a processor for controlling the cutting device based on the image data.

12. The cutting system according to claim 11, further comprising at least one further cutting device arranged downstream in relation to the cutting device so as to perform at least one subsequent cut on the food items.

13. The cutting device according to claim 11 or 12, where the cutting planes of the cutting devices form an angle between 30 and 120°.

14. The cutting system according to claim 13, where the plane of one or more cutting units performs an angle between 10 and 60° compared to vertical axis.

**Patentansprüche**

1. Schneidvorrichtung (100), die zum Schneiden von Nahrungsmitteln in kleinere Nahrungsmittel (104) über eine Drehbewegung der Schneidvorrichtung (100) angepasst ist, während die von einem Fördersystem (520) beförderten Nahrungsmittel einen Spalt (106, 306) passieren, der sich über eine Tragfläche (510, 511) des Fördersystems (520) erstreckt, wobei sich die Schneidebene der Schneidvorrichtung durch den Spalt erstreckt, **dadurch gekennzeichnet, dass** die Schneidvorrichtung über dem Spalt (106, 306) angeordnet ist, die Schneidvorrichtung umfassend:

   • einen Arm (101),
   • eine Schneidklinge (102), die an einem Ende des Arms montiert ist, wobei das gegenüberliegende Ende des Arms angepasst ist, an einer Antriebseinheit (301) montiert zu werden, eine Drehbewegung des Arms und somit der Schneidklinge bereitzustellen,
   wobei die Schneidklinge an dem Arm montiert ist, so dass während des Schneidens eines Nahrungsmittels in kleinere Nahrungsmittel eine Schneidkantenseite (103) der Schneidklinge mit dem Nahrungsmittel unter einem Winkel (201) in Eingriff kommt, so dass die Schneidklinge mit einer nach unten gerichteten Kraft (401) auf das Nahrungsmittel und in Richtung der Tragfläche (510, 511) des Fördersystems (520) während des Schneidens ausübt, und
   wobei die Schneidklinge (102) an dem Arm (101) derart montiert ist, dass die Schneidkantenseite (103) der Schneidklinge einen Winkel in Bezug auf eine Längsachse des Arms (101) bildet, wobei die Längsachse des Arms senkrecht zu der Drehachse des Arms (101) ist.

2. Schneidvorrichtung gemäß Anspruch 1, wobei die Schneidkantenseite (103) und die Tragfläche oder eine Tangente am Berührungspunkt (302) der Tragfläche (306) um den Spalt einen spitzen Winkel (201) während des Schneidens bilden.

3. Schneidvorrichtung gemäß Anspruch 2, wobei der spitze Winkel zwischen 10° und 60°, vorzugsweise zwischen 20° und 30°, am meisten bevorzugt bei ungefähr 25° liegt.

4. Schneidvorrichtung gemäß einem der vorhergehenden Ansprüche, wobei die Schneidkantenseite eine glatte Schneidkante umfasst.

5. Schneidvorrichtung gemäß Anspruch 4, wobei die glatte Schneidkante eine im Wesentlichen gerade Schneidkante ist.

6. Schneidvorrichtung gemäß einem der vorhergehenden Ansprüche, wobei der Arm (101) aus einem Material gefertigt ist, das ausgewählt ist aus:

   • Kohlefasern,
   • Keramikmaterial,
   • Kunststoffmaterial oder
   • Metall oder Metalllegierung.

7. Schneidvorrichtung gemäß einem der vorhergehenden Ansprüche, wobei die Länge des Arms an die maximale Dicke der Nahrungsmittel angepasst ist, so dass, wenn der Arm an der Antriebseinheit montiert ist, die Länge des Arms kürzer ist als der Abstand von dem Drehpunkt zu den Nahrungsmitteln mit einem lichten Abstand zwischen dem gegenüberliegenden Ende des Arms und der Oberseite der Nahrungsmittel, wobei der lichte Abstand möglicherweise in dem Bereich von 1 bis 9 mm, vorzugsweise im Bereich von 3 bis 7 mm, am meisten bevorzugt bei ungefähr 5 mm liegen kann.

8. Schneidvorrichtung gemäß einem der vorhergehenden Ansprüche, wobei die Tragfläche konkav und geformt ist, so dass sie im Wesentlichen dem Weg der Schneidklinge (102) folgt.

9. Schneidvorrichtung gemäß einem der vorhergehenden Ansprüche, wobei die Schneidvorrichtung zum Einstellen und/oder Stoppen/Starten der Drehbewegung des Arms und der Schneidklinge (102) zwischen aufeinanderfolgenden Schnitten angepasst ist.

10. Verfahren zum Schneiden von Nahrungsmitteln in kleinere Nahrungsmittel unter Verwendung einer Schneidvorrichtung, wobei die Schneidvorrichtung zum Schneiden von Nahrungsmitteln in kleinere Nahrungsmittel (104) über eine Drehbewegung einer Schneidvorrichtung angepasst ist, während die von einem Fördersystem beförderten Nahrungsmittel einen Spalt passieren, der sich quer über eine Tragfläche (510, 511) des Fördersystems (520) erstreckt, wobei sich die Schneidebene der Schneidvorrichtung durch den Spalt erstreckt, **dadurch gekennzeichnet, dass** die Schneidvorrichtung über dem Spalt (106, 306) angeordnet ist, die Schneidvorrichtung umfassend:

• einen Arm (101),
• eine Schneidklinge (102), die an einem Ende des Arms montiert ist, wobei das gegenüberliegende Ende des Arms angepasst ist, an einer Antriebseinheit (301) montiert zu werden, eine Drehbewegung des Arms und somit der Schneidklinge bereitzustellen,
wobei die Schneidklinge an dem Arm montiert ist, so dass während des Schneidens eines Nahrungsmittels in kleinere Nahrungsmittel eine Schneidkantenseite (103) der Schneidklinge mit dem Nahrungsmittel unter einem Winkel (201) in Eingriff kommt, so dass die Schneidklinge mit einer nach unten gerichteten Kraft (401) auf das Nahrungsmittel und in Richtung der Tragfläche des Fördersystems während des Schneidens ausübt, und
wobei die Schneidklinge (102) an dem Arm (101) derart montiert ist, dass die Schneidkantenseite (103) der Schneidklinge einen Winkel in Bezug auf eine Längsachse des Arms (101) bildet, wobei die Längsachse des Arms senkrecht zu der Drehachse des Arms (101) ist.

11. Schneidsystem, das zum Schneiden von Nahrungsmitteln in kleinere Nahrungsmittel angepasst ist, das die Schneidvorrichtung gemäß einem der Ansprüche 1 bis 9 umfasst, wobei das Schneidsystem ferner umfasst:

• ein Bildgebungssystem zum Bereitstellen von Bilddaten für ein ankommendes Nahrungsmittel, und
• einen Prozessor zum Steuern der Schneidvorrichtung basierend auf den Bilddaten.

12. Schneidsystem gemäß Anspruch 11, das ferner zumindest eine fernere Schneidvorrichtung umfasst, die in Bezug auf die Schneidvorrichtung nachgeschaltet eingerichtet ist, um so zumindest einen nachfolgenden Schnitt an den Nahrungsmitteln durchzuführen.

13. Schneidvorrichtung gemäß Anspruch 11 oder 12, wobei die Schneidebenen der Schneidvorrichtungen einen Winkel zwischen 30 und 120° bilden.

14. Schneidsystem gemäß Anspruch 13, wobei die Ebene einer oder mehrerer Schneideinheiten einen Winkel zwischen 10 und 60° gegenüber der vertikalen Achse durchführt.

## Revendications

1. Dispositif de coupe (100) adapté pour couper des produits alimentaires en produits alimentaires plus petits (104) par l'intermédiaire d'un mouvement de rotation du dispositif de coupe (100) pendant que les produits alimentaires transportés par un système de transport (520) passent un espace (106, 306), qui s'étend à travers une surface porteuse (510, 511) du système de transport (520) avec le plan de coupe du dispositif de coupe s'étendant à travers l'espace, **caractérisé en ce que** le dispositif de coupe est placé au-dessus de l'espace (106, 306), le dispositif de coupe comprenant :

• un bras (101) ;
• une lame de coupe (102) montée à une extrémité du bras, l'extrémité opposée du bras étant adaptée pour être montée sur une unité d'entraînement (301) destinée à fournir un mouvement de rotation du bras et donc de la lame de coupe,
ladite lame de coupe étant montée sur le bras de sorte que, pendant la coupe d'un produit alimentaire en produits alimentaires plus petits, un côté bord de coupe (103) de la lame de coupe vienne en prise avec le produit alimentaire sous un angle (201) de sorte que la lame de coupe s'exerce avec une force orientée vers le bas (401) sur le produit alimentaire et vers la surface porteuse (510, 511) du système de transport (520) durant la coupe, et

ladite lame de coupe (102) étant montée sur le bras (101) d'une façon telle que le côté bord de coupe (103) de la lame de coupe forme un angle par rapport à un axe longitudinal du bras (101), ledit axe longitudinal du bras étant perpendiculaire à l'axe de rotation du bras (101).

2. Dispositif de coupe selon la revendication 1, ledit côté bord de coupe (103) et ladite surface porteuse ou la tangente au point de contact (302) de la surface porteuse (306) autour de l'espace formant un angle aigu (201) durant la coupe.

3. Dispositif de coupe selon la revendication 2, ledit angle aigu étant compris entre 10° et 60°, de préférence entre 20° et 30°, idéalement autour de 25°.

4. Dispositif de coupe selon l'une quelconque des revendications précédentes, ledit côté bord de coupe comprenant un bord de coupe lisse.

5. Dispositif de coupe selon la revendication 4, ledit bord de coupe lisse étant un bord de coupe sensiblement droit.

6. Dispositif de coupe selon l'une quelconque des revendications précédentes, ledit bras (101) étant constitué d'un matériau choisi parmi :

   • des fibres de carbone,
   • un matériau céramique,
   • une matière plastique, ou
   • un métal ou un alliage métallique.

7. Dispositif de coupe selon l'une quelconque des revendications précédentes, ladite longueur du bras étant adaptée à l'épaisseur maximale des produits alimentaires, de sorte que lorsque le bras est monté sur l'unité d'entraînement, la longueur du bras soit plus courte que la distance du pivot aux produits alimentaires avec une distance de jeu entre l'extrémité opposée du bras et le dessus des produits alimentaires, où la distance de jeu pouvant être comprise dans la plage allant de 1 à 9 mm, de préférence dans la plage allant de 3 à 7 mm, idéalement autour de 5 mm.

8. Dispositif de coupe selon l'une quelconque des revendications précédentes, ladite surface porteuse étant concave et façonnée de sorte qu'elle suive sensiblement le trajet de la lame de coupe (102).

9. Dispositif de coupe selon l'une quelconque des revendications précédentes, ledit dispositif de coupe étant adapté pour régler et/ou arrêter/démarrer le mouvement de rotation du bras et de la lame de coupe (102) entre les coupes successives.

10. Procédé de coupe de produits alimentaires en produits alimentaires plus petits à l'aide d'un dispositif de coupe, le dispositif de coupe étant adapté pour couper des produits alimentaires en produits alimentaires plus petits (104) par l'intermédiaire du mouvement de rotation d'un dispositif de coupe pendant que les produits alimentaires transportés par un système de transport passent un espace s'étendant à travers une surface porteuse (510, 511) du système de transport (520) avec le plan de coupe du dispositif de coupe s'étendant à travers l'espace, **caractérisé en ce que** le dispositif de coupe est placé au-dessus de l'espace (106, 306), le dispositif de coupe comprenant :

   • un bras (101) ;
   • une lame de coupe (102) montée à une extrémité du bras, l'extrémité opposée du bras étant adaptée pour être montée sur une unité d'entraînement (301) destinée à fournir un mouvement de rotation du bras et donc de la lame de coupe,

   ladite lame de coupe étant montée sur le bras de sorte que, pendant la coupe d'un produit alimentaire en produits alimentaires plus petits, un côté bord de coupe (103) de la lame de coupe vienne en prise avec le produit alimentaire sous un angle (201) de sorte que la lame de coupe s'exerce avec une force orientée vers le bas (401) sur le produit alimentaire et vers la surface porteuse du système de transport durant la coupe, et

   ladite lame de coupe (102) étant montée sur le bras (101) d'une façon telle que le côté bord de coupe (103) de la lame de coupe forme un angle par rapport à un axe longitudinal du bras (101), ledit axe longitudinal du bras étant perpendiculaire à l'axe de rotation du bras (101).

**11.** Système de coupe adapté pour couper des produits alimentaires en produits alimentaires plus petits, comprenant le dispositif de coupe selon l'une quelconque des revendications 1 à 9, où le système de coupe comprend en outre :

- un système d'imagerie destiné à fournir des données d'image pour un produit alimentaire entrant, et
- un processeur destiné à commander le dispositif de coupe sur la base des données d'image.

**12.** Système de coupe selon la revendication 11, comprenant en outre au moins un dispositif de coupe supplémentaire agencé en aval par rapport au dispositif de coupe de façon à effectuer au moins une coupe ultérieure sur les produits alimentaires.

**13.** Dispositif de coupe selon la revendication 11 ou 12, lesdits plans de coupe des dispositifs de coupe formant un angle compris entre 30 et 120°.

**14.** Système de coupe selon la revendication 13, ledit plan d'une ou plusieurs unités de coupe formant un angle compris entre 10 et 60° par rapport à l'axe vertical.

**FIG. 1**

**FIG. 2**

**FIG. 3**

**FIG. 4a**

**FIG. 4b**

**FIG. 4c**

**FIG. 5a**

**FIG. 5b**

**FIG. 5c**

**FIG. 6a**

**FIG. 6b**

**FIG. 6c**

**FIG. 6d**

**FIG. 6e**

**FIG. 6f**

**EP 3 224 006 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DK 9600164 U3
- WO 2004106020 A1